# EUROPEAN PATENT APPLICATION

(11) **EP 2 282 583 A1**
(43) Date of publication of application: **09.02.2011**
(21) Application number: 09251819.0
(22) Date of filing: 17.07.2009
(51) Int. Cl.: H04W 48/12, H04W 48/16

(54) **Wireless access point implementing variable beacon transmission intervals**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

An access 10 point for a wireless communications system has a beacon generation unit 29 which periodically transmits a beacon signal. The interval between such beacons is varied by a period selection unit 25 according to the amount of traffic currently being handled by the access point's traffic management unit 18.

## Description

This invention relates to wireless access points of the kind connected to a fixed network to allow communication with remote wireless communications terminals. Such devices work to various standards, such as the commonly-used 802.11 WLAN (wireless local area network). Such access points, operating in infrastructure mode, can send and receive from one or more wirelessly connected terminals. The WLAN standard uses CSMA/CA (Carrier Sense Multiple Access With Collision Avoidance) to share the wireless medium, so that a WLAN device checks that the channel is clear before considering whether to transmit.

Access points are used both to provide public wireless access services and for individual users to provide a private network, for example to interconnect several terminals in different parts of the same premises.

An access point advertises itself by transmitting a beacon packet, typically every 100ms, though this interval can be longer or shorter; and when the wireless medium is congested single beacon packets can be delayed slightly or even omitted altogether. An access point can support more than one SSID (service set identifier). If this is achieved using the technique of Virtual access points then the access point will regularly send a beacon for each SSID supported.

Congestion in the radio frequency channels used by WLAN systems is becoming a significant issue in a growing number of environments, particularly where several access points or virtual access points are operating in close proximity to each other. Unlike the cellular telephony infrastructure, there is no overall plan for the distribution of access points, and they are positioned by service providers or individual users more or less at will.

There is concern that in areas where there are several access points, the beacons they generate make a significant contribution to channel congestion, because whenever an access point transmits a beacon, it prevents other terminals or access points transmitting data packets on the same channel. In an environment with several access points within range, the number of beacon packets being transmitted can contribute significantly to the total congestion. It has been known for up to 30% of the available time for transmitting data being occupied just by the beacon signals. These beacons are transmitted even if no terminals are associated or are in the process of associating to the access point.

Simply increasing the beacon interval would reduce congestion due to beacons but can have detrimental side-effects, including- a deterioration in quality of service and operation of power saving features. However the beacon interval could be varied to suit the current use being made of an access point.

According to a first aspect of the present invention, there is provided an access point for providing wireless communications connections with one or more terminals, the access point having a traffic processor for processing communications traffic passing between the access point and the terminals, and a beacon generator for transmitting a beacon signal at predetermined times for detection by such terminals, the beacon generator having a traffic monitor for monitoring communications traffic handled by the traffic processor and the beacon generator being responsive thereto by varying the intervals between transmission of beacon signals.

According to a second aspect of the invention, there is provided a method of controlling an access point for providing wireless communications connections with one or more terminals, the access point having a traffic processor for processing communications traffic passing between the access point and the terminals, the access point being arranged to transmit a beacon signal at predetermined times for detection by such terminals, wherein the intervals between transmission of beacon signals are varied according to the communications traffic handled by the access point.

The beacon interval may be increased when no remote terminals are in wireless communication with the access point. This increase in beacon interval reduces congestion for other users of the channel or overlapping channels which are also within range of the access point. When a terminal subsequently communicates with the access point, then the beacon interval is restored to the optimal in-use setting.

As many access points have no clients associated to them for most of the time, the invention could provide a significant reduction in congestion. An incidental advantage is that the increased interval between beacons reduces overall power consumption.

This invention could also be applied to other situations. For example, the beacon interval could be modified according to the number of remote terminals currently associated with the access point, the number of such terminals currently in power-save mode, or the quality of service categories in use.

Wireless terminals are typically designed to cope with beacon intervals of up to 1 second, so, in the embodiment to be described, the access point has a nominal beacon interval of 0.1s when one or more terminals are connected, and 1s when no terminals are connected. However, other intervals may be used.

An embodiment of the invention will now be described with reference to the Figures, in which
Figure 1 is a schematic diagram illustrating the functional elements of an access point according to the invention.
Figure 2 is a schematic diagram illustrating in more detail the functional elements of the beacon generation element of the access point of Figure 1.
Figure 3 is a flowchart illustrating the mode of operation of the access point depicted in Figure 1.

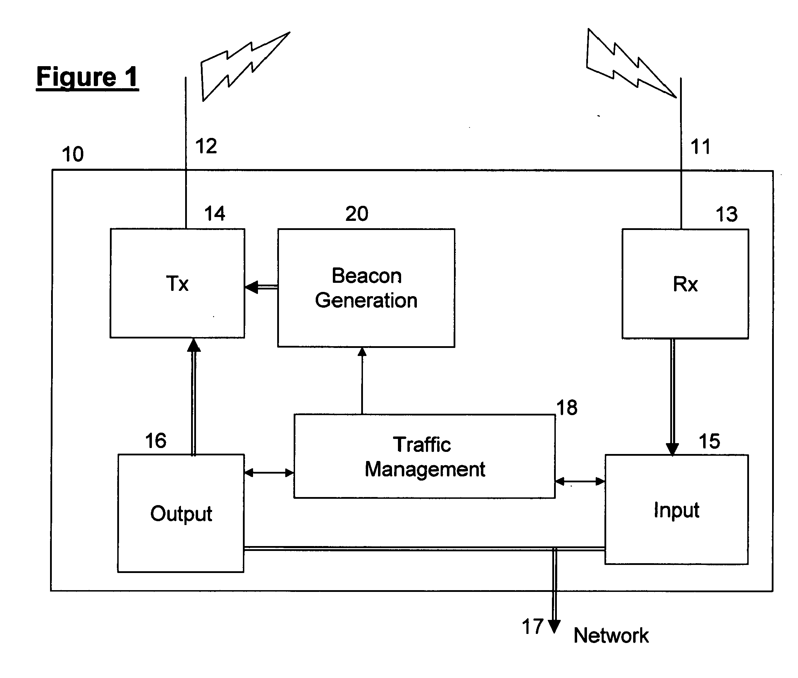

Figure 1 depicts an access point 10 having a wireless receiver 13 and wireless transmitter 14 with associated antennas 11, 12. These functions are shown separately in the Figure, but in practice are usually embodied into a transceiver, with a common antenna. Data received by the access point from a remote user is processed by an input device 15 which performs the various decoding, buffering, addressing and re-coding functions necessary to forward the data either over a fixed network 17 or to a different terminal. Conversely, data received from the fixed network 17 for transmission from the access point 10 to a remote user is decoded, addressed, re-coded and buffered for wireless transmission to the co-operating remote user.

A traffic management function 18 monitors the level of data traffic in both directions and performs handshake and other interactions with the remote users.

A beacon generation function 20 generates a beacon signal periodically for transmission by the transmitter 14. The beacon signal is used by the co-operating remote terminals to establish and maintain communication with the access point.

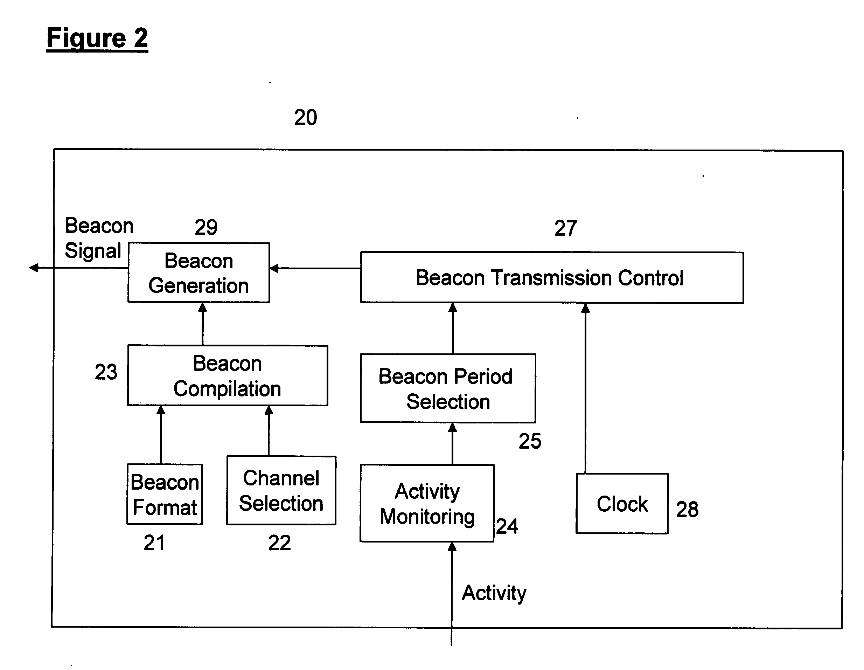

According to the invention, the beacon generator 20 monitors the traffic handled by the traffic management system 18 and controls the transmission of the beacon signals in accordance with the current traffic requirements, as will now be discussed in more detail with reference to Figure 2.

Figure 2 is a schematic representation of the functional elements of the beacon generator 20 of Figure 1. The beacon signal takes the form of a data string of a predetermined form retrieved from a store 21, identifying the channel to which the beacon signal relates. The identity of the channel is retrieved from a store 22. This data is supplied to a compiler 23 which produces the complete data string for retrieval by a beacon generation unit 29 when transmission of the beacon is required. The access point may be capable of operation on more than one channel or protocol (standard), in which case separate beacons are generated for each one.

Transmission of the beacon signal by the beacon generation unit 29 is triggered by a transmission control unit 27. The timing of these triggers is controlled by a period selection unit 25, which sets the desired interval between the triggers. The transmission control unit 27 sets a timer according to the settings given to it by the period selection unit 25, monitors a clock 28 until the required time has elapsed, upon which it triggers the beacon generation unit 29 to transmit the beacon signal that has been compiled by the compiler 23.

According to the invention, the period set by the period selection unit 25 is not fixed, but has an input from the traffic management unit 18 allowing the period to be varied according to the amount of traffic currently being handled by the access point 10.

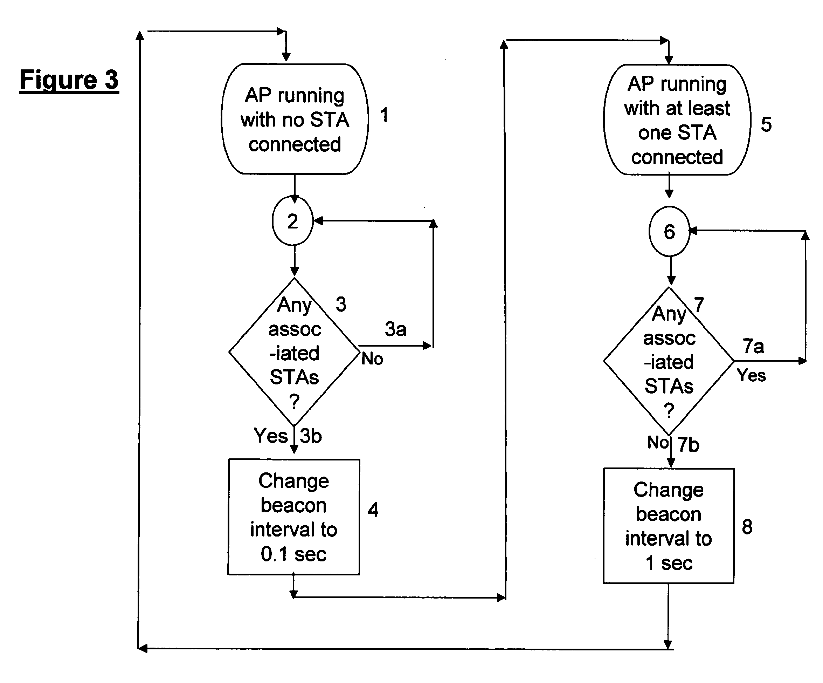

The operation of the beacon period selection unit 25 will now be described, with reference to Figure 3. The operation is cyclic, so this description will start from a condition in which the access point 10 is operating with no remote terminals currently connected to it (step 1), the beacon period selection unit 25 is controlling the transmission controller 27 to generate a beacon at the longer periodicity of 1 second (step 2). The activity monitor 24 monitors the traffic management system 18 for the number of associated devices and whether they are currently active. If no such terminals are currently associated with the access point (step 3a), the interval remains at 1 second. The beacon period may also be decreased (made more frequent) if the activity monitor 24 identifies data arriving from the fixed network 17 which is addressed to a terminal currently associated with the access point, or in response to a probe request from a remote terminal.

If such traffic is detected, for example a remote terminal responds to the beacon, (step 3b) by establishing an association with the access point, the beacon period selection unit 25 re-sets the beacon interval to a shorter period (e.g. 0.1 second) (step 4) and the access point starts to exchange data with the remote unit (step 5).

Beacons are then transmitted every 0.1 seconds (step 6). Further remote units may also respond to the beacon by communicating with the access point in the same way.

Provided at least one remote unit remains associated with the access point, (step 7a) the beacon rate is maintained at 0.1 second. Indeed, the originally-connected remote unit may drop out, but provided others have been connected the beacon rate will be maintained.

If the activity monitor 24 identifies no associated terminal (step 7b) the beacon period selector 25 reverts the beacon interval to the standby rate of 1 second (step 8), and the access point reverts to the quiet state (step 1). To avoid premature reversion to this state in the event of a transitory loss of contact with a remote unit, the period selection unit 25 may allow the beacon interval to be maintained at the higher rate (7a) until several successive beacons have been transmitted with no terminal becoming re-associated with the access point.

The embodiment shows only two different beacon intervals, selected according to a single criterion. In a variant embodiment, the beacon interval could be modified according to the number of remote terminals currently associated with the access point, the number of such terminals currently in power-saving mode, or the quality of service categories in use. More than two different intervals may be used for different criteria or combinations of conditions.

## Claims

1. An access point for providing wireless communications connections with one or more terminals, the access point having a traffic processor for processing communications traffic passing between the access point and the terminals, and a beacon generator for transmitting a beacon signal at predetermined times for detection by such terminals, the beacon generator having a traffic monitor for monitoring communications traffic handled by the traffic processor, and the beacon generator being responsive thereto by varying the intervals between transmission of beacon signals.

2. An access point according to claim 1, wherein the period between the transmission of beacon signals is varied according to the number of remote terminals currently in communication with the access point.

3. An access point according to claim 2, wherein the period between the transmission of beacon signals is varied according to the number of those remote terminals currently in communication with the access point which are in a dormant or power-saving mode.

4. An access point according to claim 2, wherein the period between the transmission of beacon signals is of a first duration when at least one remote terminal is in communication with the access point and of a second, longer, duration when no remote terminals are in communication with the access point.

5. An access point according to claim 1, wherein the period between the transmission of beacon signals is varied according to externally-provided service quality data applicable to one or more of the remote terminals currently associated with the access point.

6. An access point according to any preceding claim, capable of operation on a plurality of access networks each having a respective beacon signal, wherein the beacon intervals for the respective access networks are each controlled separately according to the traffic on each access network.

7. A method of controlling an access point for providing wireless communications connections with one or more terminals, the access point having a traffic processor for processing communications traffic passing between the access point and the terminals, the access point being arranged to transmit a beacon signal at predetermined times for detection by such terminals, wherein the intervals between transmission of beacon signals are varied according to the communications traffic handled by the access point.

8. A method according to claim 7, wherein the period between the transmission of beacon signals is varied according to the number of remote terminals currently in communication with the access point.

9. A method according to claim 8, wherein the period between the transmission of beacon signals is varied according to the number of those remote terminals currently in communication with the access point which are in a dormant or power-saving mode.

10. A method according to claim 8, wherein the period between the transmission of beacon signals is of a first duration when at least one remote terminal is in communication with the access point and of a second, longer, duration when no remote terminals are in communication with the access point.

11. A method according to claim 7, wherein the period between the transmission of beacon signals is varied according to externally-provided service quality data applicable to one or more of the remote terminals currently associated with the access point.

12. An access point according to claim 7, 8, 9, 10 or 11, wherein the beacon intervals for each of a plurality of access networks are each controlled separately according to the traffic on each access network.
